# EUROPÄISCHE PATENTSCHRIFT

(11) **EP 2 083 286 B1**
(45) Veröffentlichungstag und Bekanntmachung des Hinweises auf die Patenterteilung: **09.03.2016**
(21) Anmeldenummer: 08019528.2
(22) Anmeldetag: 07.11.2008
(51) Int. Cl.: G01V 8/22

(54) **Lichtschranke**
Light barrier
Barrière lumineuse

(30) Priorität: 25.01.2008 DE 202008001122 U
(43) Veröffentlichungstag der Anmeldung: 29.07.2009
(73) Patentinhaber: Marantec Antriebs- und Steuerungstechnik GmbH & Co. KG, 33428 Marienfeld (DE)
(72) Erfinder: Hörmann, Michael, 33790 Halle/Westf. (DE)
(74) Vertreter: Laufhütte, Dieter

(56) Entgegenhaltungen:
- EP-A- 0 391 883
- EP-A- 0 466 522
- DE-A1- 2 528 125
- DE-A1- 10 018 948
- US-A- 3 932 742
- US-A1- 2003 020 616
- US-A1- 2003 206 105

## Beschreibung

Die vorliegende Erfindung betrifft eine Lichtschranke zur Überwachung eines Lichtweges mit einer Basisanordnung aus einem ersten Sender, welcher ein Lichtsignal ausstrahlt und einem ersten Empfänger, welcher ein Ausgangssignal für eine Steuerung generiert. Insbesondere betrifft die vorliegende Erfindung Lichtschranken für die Ansteuerung von Torantrieben.

Durch eine solche Lichtschranke läßt sich detektieren, ob sich ein Objekt im überwachten Lichtweg befindet, indem mit dem Empfänger überprüft wird, ob das Objekt das vom Sender ausgestrahlte Lichtsignal blockiert oder nicht. Der Empfänger der Basisanordnung wertet dabei das eingestrahlte Lichtsignal aus und stellt an einem Steuerausgang ein entsprechendes Schaltsignal zur Verfügung. Dabei ist sowohl ein Funktionsprinzip mit einem statischen Ausgangssignal, als auch ein dynamisches Prinzip möglich.

Bekannte Lichtschranken sind dabei entweder als Einweg-Lichtschranken ausgelegt, wobei auf einer Seite des zu überwachenden Lichtweges der Sender und auf der anderen Seite der von diesem direkt angestrahlte Empfänger angeordnet ist.

Alternativ hierzu werden Reflexlichtschranken eingesetzt, bei welchen das vom Sender der Basisanordnung ausgestrahlte Licht über einen passiven Reflektor zurück auf den Empfänger der Basisanordnung reflektiert wird. Solche Reflexlichtschranken sind dabei einfacher zu montieren und kostengünstiger herzustellen, weisen jedoch aufgrund von möglicherweise auftretender fehlerhafter Reflexion ein geringeres Sicherheitsniveau auf, und sind daher in ihrer Reichweite begrenzt.

US 2003/206105 A1 betrifft ein optisches Sicherheitssystem mit einer ersten und einer zweiten Übertragungs-/Empfänger-Einheit. Es ist weiterhin offenbart, dass ein vom ersten Sender ausgestrahlte Lichtsignal in der zweiten Übertragungs-/Empfänger-Einheit zuerst durch einen Verstärker verstärkt, anschließend durch einen Treiber moduliert und schließlich als ein Antwortsignal durch einen zweiten Sender zum ersten Empfänger in der ersten Übertragungs-/Empfänger-Einheit zurückgesendet. Mit anderen Worten wird in dieser Druckschrift offenbart, dass das vom ersten Sender ausgestrahlte Lichtsignal in der zweiten Übertragungs-/Empfänger-Einheit verarbeitet und verändert wird, um ein Antwortsignal zu erzeugen. Somit ist die Anordnung der Übertragungs-/Empfänger-Einheit ziemlich kompliziert.

EP-A-0 466 522 A1 bezieht sich auf eine Infrarot-Eindringalarmanlage, die einen Infrarotstrahl-Projektionsteil und einen Infrarotstrahl-Detektorteil umfasst, mit einem neu entwickelten Signalrückführungssystem, das aus einem Signal-Übermittlungsteil und einem Signalempfangsteil besteht. Das vom ersten Sender ausgestrahlte Lichtsignal wird hier im Strahldetektorteil durch einen Verstärker und einen Impulssignaldetektor verarbeitet und verändert. Das verarbeite Signal wird schließlich durch einen Signalübermittler des Signalübermittlungsteils dem Signalempfänger zugeführt. Des Weiteren wird das vom Signalübermittler gesendete Feedback-Signal nur zum Signalempfänger zurückgesendet, aber nicht im Signalempfangsteil IC auswertet. Die Auswertung des Signals findet in einem Infrarotstrahl-Detektorteil mittels eines Komparators statt.

Aufgabe der vorliegenden Erfindung ist es daher, eine Lichtschranke zur Verfügung zu stellen, welche ein höheres Sicherheitsniveau gegenüber bekannten Reflexlichtschranken aufweist.

Erfindungsgemäß wird diese Aufgabe von einer Lichtschranke gemäß Anspruch 1 gelöst. Eine solche Lichtschranke zur Überwachung eines Lichtweges weist dabei zunächst eine Basisanordnung aus einem ersten Sender, welcher ein Lichtsignal ausstrahlt, und einen ersten Empfänger, welcher ein Ausgangssignal für eine Steuerung generiert, auf. Erfindungsgemäß weist die Lichtschranke weiterhin eine aktive Reflektoranordnung auf, welche einen zweiten Empfänger zum Empfang des von dem ersten Sender ausgestrahlten Lichtsignals und einen zweiten Sender zum Aussenden eines Feedback-Signals in Abhängigkeit vom empfangenen Lichtsignal aufweist. Hierdurch können unerwünschte optische Reflexionen, welche die Sicherheit von bekannten passiven Reflexlichtschranken beeinträchtigen, ausgeschlossen werden. Eine Begrenzung der Reichweite aufgrund von fehlerhaften Reflexionen ist demnach nicht gegeben. Damit können die erfindungsgemäßen Lichtschranken ohne Einschränkung der Reichweite insbesondere für alle Toranwendungen ausgelegt werden. Damit läßt sich durch die erfindungsgemäße Lichtschranke im Vergleich zu Einweglichtschranken ein gleichwertiges oder höheres Sicherheitsniveau erzielen, und gleichzeitig der Herstellungs- bzw. Montageaufwand reduziert werden.

Bei der erfindungsgemäßen Lichtschranke ergibt sich damit zunächst eine erste optische Signalstrecke zwischen dem ersten Sender und dem zweiten Empfänger. Die aktive Reflektoranordnung weist eine Auswerteeinheit auf, welche überprüft, ob das vom ersten Sender ausgestrahlte Lichtsignal am zweiten Empfänger ankommt. Ist dies der Fall, sendet der zweite Sender ein Feedback-Signal an den ersten Empfänger aus. Die zweite optische Signalstrecke befindet sich nun zwischen dem zweiten Sender und dem ersten Empfänger. Die Basisanordnung empfängt daher über den ersten Empfänger das Feedback-Signal der Reflektoranordnung und wertet es aus. Der erste Empfänger stellt dabei nach Auswertung des Feedback-Signals am Ausgang der Basisanordnung ein entsprechendes Schaltsignal zur Verfügung.

Kommt ein korrektes Feedback-Signal beim ersten Empfänger an, bedeutet dies, dass weder die erste noch die zweite optische Signalstrecke blockiert ist. Befindet sich dagegen ein Objekt im Lichtweg, welches die Übertragung der Lichtsignale in der ersten und/oder zweiten optischen Signalstrecke stören würde, empfängt die Basisanordnung auf das Aussenden eines Lichtsignals kein korrektes Feedback-Signal. Die Basisanordnung generiert dann ein entsprechendes Schaltsignal für die Steuerung z.B. eines Torantriebs.

In vorteilhafter Weise senden der erste und der zweite Sender unterschiedliche Signale aus. Hierdurch verbessert sich die Betriebssicherheit der erfindungsgemäßen Lichtschranke, da die beiden optischen Signalstrecken mit unterschiedlichen Signalen überwacht werden. Dabei überprüfen die beiden Empfänger jeweils, ob ein korrektes Signal eingestrahlt wird. Das vom ersten Sender ausgestrahlte Signal wird damit vom ersten Empfänger nicht als gültiges Feedback-Signal akzeptiert. Ebenso wird das vom zweiten Sender ausgestrahlte Feedback-Signal vom zweiten Empfänger nicht als gültiges Aktivierungs-Signal akzeptiert. Hierfür weisen die Sender jeweils eine entsprechende Auswertungs-Elektronik auf. Hierdurch kann ausgeschlossen werden, dass von einem Objekt, welches sich im Lichtweg befindet, zurückreflektiertes Licht die Sicherheit der Lichtschranke beeinträchtigt. Durch die Verwendung unterschiedlicher Signale ist auch eine größere Freiheit der optischen Anordnung von Sendern und Empfängern gegeben, da Streulicht der einen Signalstrecke die andere Signalstrecke nicht mehr beeinflusst.

Dabei kann das vom zweiten Sender ausgestrahlte Feedback-Signal eine andere Frequenz aufweisen als das vom ersten Sender ausgestrahlte Signal. Durch die unterschiedlichen Frequenzen der für die beiden Signalstrecken verwendeten Siggnale können diese sicher voneinander unterschieden werden, so dass eine Beeinflussung zwischen den Signalstrecken vermieden wird. Dabei können uncodierte Signale verwendet werden, was die Auswertung vereinfacht.

Alternativ oder zusätzlich kann das vom zweiten Sender ausgestrahlte Feedback-Signal auch eine andere Codierung aufweisen als das vom ersten Sender ausgestrahlte Signal. Damit kann z. B. mit gleichen Trägerfrequenzen gearbeitet werden, aber unterschiedlich kodierte Signale für die beiden optischen Signalstrecken verwendet werden. Es kann so für beide Signalstrecken auf das gleiche Übertragungsprotokoll zurückgegriffen werden, und lediglich eine andere Codierung für die beiden Signalstrecken verwendet werden. Auch hier ergibt sich eine hohe Sicherheit gegen Störungen, da die Signale der einen Signalstrecke den Betrieb der anderen Signalstrecke nicht mehr beeinflussen können. Natürlich können aber auch unterschiedliche Frequenzen und unterschiedliche Codierungen verwendet werden.

In vorteilhafter Weise bilden der erste Sender und der erste Empfänger eine Baueinheit. Ebenso können vorteilhafterweise der zweite Sender und der zweite Empfänger eine Baueinheit bilden. Hierdurch ergibt sich eine einfache Installation und Ausrichtung der Lichtschranke, da lediglich die als eine erste Baueinheit ausgeführte Basisanordnung und die als eine zweite Baueinheit ausgeführte Reflektoranordnung montiert und gegeneinander ausgerichtet werden müssen.

Alternativ zu einer Anordnung, bei welcher das Feedback-Signal des zweiten Senders direkt auf den ersten Empfänger gestrahlt wird, sind jedoch auch komplexere Lichtwege denkbar, bei welchen das Feedback-Signal über weitere, gegebenenfalls ebenfalls aktive, Reflektoren zum ersten Empfänger zurückgeleitet wird.

Wie beschrieben, beruht das Prinzip der erfindungsgemäßen Reflexionslichtschranke dabei auf mindestens zwei optischen Signalstrecken für die Überwachung eines Lichtweges. Bei gleichbleibendem elektrischem Funktionsablauf sind dabei je nach Anwendung für die optischen Signalstrecken unterschiedliche räumliche Anordnungen möglich:
Dabei ist zunächst eine getrennte Anordnung möglich, bei welcher der erste Sender und der erste Empfänger mit einem gewissen Abstand voneinander angeordnet oder anordenbar sind und getrennte Optiken aufweisen und/oder der zweite Sender und der zweite Empfänger mit einem gewissen Abstand voneinander angeordnet oder anordenbar sind und getrennte Optiken aufweisen. Hierdurch sind zwei getrennte optische Lichtwege gegeben, welche durch die erfindungsgemäße Lichtschranke überwacht werden.

Weiterhin ist auch eine kompakte Anordnung möglich, bei welcher Sender und Empfänger jeweils räumlich benachbart angeordnet sind. Insbesondere weisen der Sender und der Empfänger dabei vorteilhafterweise eine gemeinsame Optik auf, so daß die Produktionskosten gesenkt werden können und der Justageaufwand verringert wird. Durch diese Integration von Sender und Empfänger in ein Modul mit gemeinsamer Optik läßt sich das System auf eine bidirektionale optische Lichtstrecke zusammenfassen, bei welcher die beiden optischen Signalstrecken zusammenfallen.

In weiterhin vorteilhafter Weise ist die Energieversorgung von Basisanordnung und Reflektoranordnung getrennt ausgeführt, so daß sich der Montageaufwand verringern läßt.

In weiterhin vorteilhafter Weise erfolgt die Energieversorgung und Reflektoranordnung über einen elektrischen Energiespeicher und/oder ein Solarkollektor. Dadurch, daß die Energieversorgung der Reflektoranordnung entsprechend über eine Batterie oder ein Solarkollektor mit Akkupufferung erfolgt, ist der Installationsaufwand der Leitungsverlegung nur auf das Basisgerät beschränkt, während die erfindungsgemäße aktive Reflektoranordnung wie eine passive Reflektoranordnung ohne Spannungs- bzw. Netzanschluss auskommt.

In weiterhin vorteilhafter Weise weist die Reflektoranordnung einen Stand-by-Modus auf. Hierdurch kann Energie gespart werden, so daß insbesondere bei der Verwendung eines elektrischen Energiespeichers und/oder eines Solarkollektors dennoch eine lange Betriebszeit möglich wird. Insbesondere schaltet die erfindungsgemäße Reflektoranordnung dabei in den Stand-by-Modus, wenn der zweite Empfänger für eine gewisse Zeitspanne kein Lichtsignal vom Sender der Basisanordnung empfangen hat.

In weiterhin vorteilhafter Weise schaltet dabei der zweite Empfänger im Stand-by-Modus in vorgegebenen Abständen aus einem inaktiven Zustand in einen aktiven Zustand, um beim Empfang eines entsprechenden Lichtsignals in einen Normalmodus mit ständiger Empfangsbereitschaft zu schalten. Der Empfänger der Reflektoranordnung wird demnach nur in geeigneten Zyklen kurz eingeschaltet, um zu überprüfen, ob ein gültiges Signal anliegt. Bei einer gültigen Aktivierung von der Basisanordnung erfolgt dann ein Wake-up mit einem Wechsel in den normalen Betrieb, in welchem der Empfänger durchgehend empfangsbereit ist. Ohne die Stimulanz von der Basisanordnung verharrt die Reflektoreinheit dagegen im energiesparenden Stand-by-Modus. Vorteilhafterweise wird die Energieversorgung des zweiten Senders dabei im Stand-By-Modus getrennt. Der Sender der Reflektoreinheit wird daher nur aktiviert, wenn ein entsprechendes Aktivierungssignal vom Empfänger der Reflektoreinheit abgegeben wird.

Für die erfindungsgemäße Lichtschranke ist ein Betrieb mit sichtbarem Licht oder mit Infrarot-Licht möglich. Vorteilhafterweise handelt es sich jedoch bei den erfindungsgemäßen Sendern um Infrarot-Sender. Diese ermöglichen unsichtbare Lichtschranken und werden daher standardmäßig bei optischen Lichtschranken eingesetzt.

Die vorliegende Erfindung umfaßt weiterhin eine aktive Reflektoranordnung für eine Lichtschranke zur Überwachung eines Lichtweges, mit einem Empfänger zum Empfangen eines Lichtsignals und einem Sender zum Aussenden eines Feedback-Signals in Abhängigkeit vom empfangenen Signal. Hierdurch ergeben sich offensichtlich die gleichen Vorteile, wie sie bereits oben bezüglich der erfindungsgemäßen Lichtschranke beschrieben wurden.

In vorteilhafter Weise handelt es sich dabei bei der aktiven Reflektoranordnung um eine Reflektoranordnung, wie sie bereits weiter oben bezüglich der erfindungsgemäßen Lichtschranke beschrieben wurde.

Vorteilhafterweise kommt die erfindungsgemäße Lichtschranke dabei bei der Ansteuerung eines Torantriebs zum Einsatz. Insbesondere kann die erfindungsgemäße Lichtschranke dabei ohne Einschränkung der Reichweite für alle Toranwendungen ausgelegt werden.

Erfindungsgemäß umfaßt die vorliegende Erfindung daher eine Torantriebssteuerung mit einer Lichtschranke, wie sie oben beschrieben wurde.

Die vorliegende Erfindung wird nun anhand eines Ausführungsbeispiels sowie einer Zeichnung näher dargestellt.

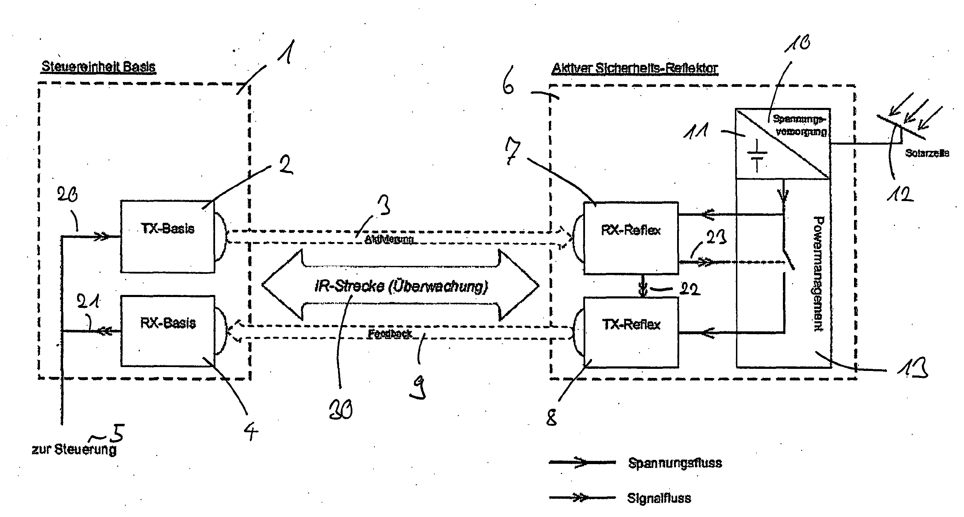

Dabei zeigt
- Figur 1: eine Prinzipdarstellung der erfindungsgemäßen Lichtschranke mit der erfindungsgemäßen aktiven Reflektoranordnung.

Figur 1 zeigt ein Prinzipschaubild der erfindungsgemäßen Lichtschranke zur Überwachung des Lichtweges 30. Die Basisanordnung 1 weist dabei einen ersten Sender 2, welcher ein Lichtsignal 3 entlang des zu überwachenden Lichtweges ausstrahlt, auf, sowie einen ersten Empfänger 4, welcher ein Ausgangssignal für eine Steuerung 5 generiert. Die Basisanordnung 1 ist dabei als Basisgerät ausgeführt, in welches der erste Sender 2 und der erste Empfänger 4 integriert sind. Diese bilden hierdurch eine Baueinheit.

Anstelle eines passiven Reflektors weist die erfindungsgemäße Lichtschranke nun erfindungsgemäß eine aktive Reflektoranordnung 6 auf, welche einen zweiten Empfänger 7 zum Empfang des von dem ersten Sender 2 ausgestrahlten Lichtsignals 3 und einen zweiten Sender 8 zum Aussenden eines Feedback-Signals 9 in Abhängigkeit von dem empfangenen Signal aufweist. Auch die aktive Reflektoranordnung 6 bildet dabei eine Baueinheit, in welche der zweite Empfänger 7 und der zweite Sender 8 integriert sind.

Die erfindungsgemäße aktive Reflektoranordnung ersetzt dabei bei der erfindungsgemäßen Lichtschranke einen passiven Reflektor, wobei das primäre Sendesignal vom Basisgerät über den zu überwachenden Lichtweg 30 zum zweiten Empfänger 7 abgestrahlt wird und dort den Empfänger aktiviert. Nach positiver Auswertung wird von der Reflektoranordnung 6 dann über den zweiten Sender 8 ein Feedback-Signal zum ersten Empfänger 4 der Basisanordnung 1 zurückgesendet. Der erste Empfänger 4 in der Basisanordnung 1 wertet dann das Signal aus und stellt am Ausgang 21 ein entsprechendes Schaltsignal zur Verfügung. Dabei ist sowohl ein Funktionsprinzip mit statischem Ausgangssignal als auch ein dynamisches Prinzip möglich.

Der Sender 2 der Basisanordnung 1 weist dabei einen Steuereingang 20 auf, über welchen er von der Steuerung 5 angesteuert werden kann. Er kann so zum Beispiel von einer Torsteuerung in gewissen Phasen, wenn eine Überwachung des Lichtweges 30 nicht benötigt wird, ausgeschaltet werden. Der Empfänger 4 der Basisanordnung 1 weist einen Ausgang 21 auf, über welchen das Ausgangssignal an die Steuerung 5 geleitet wird. Der Empfänger 4 der Basiseinheit überprüft dabei, ob das Feedback-Signal 9 anliegt oder nicht, und gibt dementsprechend ein Ausgangssignal ab, welches einem Lichtweg ohne Hindernisse oder einem Lichtweg, welcher von einem Objekt blockiert wird, entspricht.

Erfindungsgemäß läßt sich durch das Lichtschrankensystem im Vergleich zu Einweglichtschranken ein gleichwertiges oder höheres Sicherheitsniveau erzielen. Fehler durch nicht erwünschte optische Reflexion wie bei herkömmlichen passiven Reflexlichtschranken sind ausgeschlossen. Eine Begrenzung der Reichweite aufgrund von fehlerhaften Reflexionen ist demnach nicht gegeben. Die Lichtschranken können ohne Einschränkung der Reichweite für eine Toranwendung ausgelegt werden.

Die beiden optischen Signalstrecken arbeiten dabei mit unterschiedlichen Signalen, um korrekte Signale von reflektierten Störsignalen unterscheiden zu können, so daß Störreflexe, welche bei einer herkömmlichen Reflexlichtschranke durch ein im Lichtweg befindliches Objekt hervorgerufen werden können, die Sicherheit der Objekterkennung nicht mehr beeinflussen können. Im Ausführungsbeispiel arbeitet der Sender 2 der erfindungsgemäßen Basisanordnung dabei mit einer anderen Signalfrequenz als der Sender 8 der erfindungsgemäßen Reflektoranordnung. Die Empfänger überprüfen dabei jeweils die Frequenz eines ankommenden Signals und werten dieses nur dann als Steuerungssignal, wenn es die korrekte Signalfrequenz aufweist. Die Basisanordnung und die Reflektoranordnung können so zwischen einem reflektierten Störsignal (mit falscher Frequenz) und dem korrekten Signal (mit korrekter Frequenz) unterscheiden.

Ein weiterer Vorteil der erfindungsgemäßen Lichtschranke ist dabei die einfache Installation. Insbesondere kann die Spannungsversorgung der Reflektoreinheit unabhängig vom Basisgerät erfolgen, was den Installationsaufwand verringert.

Im gezeigten Ausführungsbeispiel ist dabei ein Solarkollektor 12 mit Akkupufferung 10 vorgesehen, so daß sich der Installationsaufwand der Leitungsverlegung nur auf das Basisgerät beschränkt, während keine externe Spannungsversorgung für die Reflektoreinheit nötig ist. Alternativ könnte auch eine Batterie zur Energieversorgung der Reflektoreinheit verwendet werden.

Befindet sich die Reflektoranordnung 6 im Normalbetrieb, ist der Empfänger durchgehend empfangsbereit. Erhält er jedoch über eine vorgegebene Zeitspanne kein Signal von der Basisanordnung, wechselt er selbsttätig in den Stand-by-Modus, welcher zur Energieeinsparung vorgesehen ist. Dabei ist die Energieversorgung des zweiten Senders im Stand-By-Modus getrennt.

Der Empfänger wird im Stand-by-Modus in geeigneten Zyklen kurz eingeschaltet und überprüft, ob ein Aktivierungssignal von der Basisanordnung 1 ausgesendet wird. Bei einer gültigen Aktivierung erfolgt dann ein Wake-up mit einem Wechsel in den normalen Betrieb, in welchem der Empfänger durchgehend empfangsbereit ist. Ohne die Stimulanz vom Basisgerät verharrt die Reflektoranordnung 6 dagegen im energiesparenden Stand-by-Modus. Die Empfangsperioden des Empfängers während des Stand-by-Betriebs betragen dabei vorteilhafterweise zwischen 1 ms und 50 ms, in typischer Weise ca. 10 ms. Dagegen werden längere Pausenzeiten verwendet, um Energie zu sparen. Diese liegen dabei vorteilhafterweise zwischen 50 und 500 ms, typischerweise zwischen 100 und 300 ms. Vorteilhafterweise sind die Pausenzeiten dabei mehr als fünfmal, insbesondere mehr als zehnmal solang wie die Empfangszeiten, so daß sich ein niedriger Stromverbrauch während des Stand-by-Betriebs ergibt.

Die einzelnen Komponenten der erfindungsgemäßen Lichtschranke werden nun noch einmal kurz charakterisiert:
Der erste Sender 2 bildet einen Teil der Basisanordnung. Es handelt sich um einen Infrarotsender, welcher das Sendesignal 3 zur Aktivierung der Reflektoreinheit entlang des zu überwachenden Lichtweges zum Empfänger 7 der Reflektoranordnung 6 sendet. Die Frequenz des Aktivierungssignals, welches der erste Sender 2 ausstrahlt, ist dabei f _{Aktivierung}.

Der erste Empfänger 4 bildet ebenfalls einen Teil der Basisanordnung 1. Dabei handelt es sich um ein Infrarotempfänger, welcher ein Ausgangssignal über den Ausgang 21 zur Steuerung 5 generiert. Dieses Ausgangssignal wird dabei abhängig davon, ob ein Lichtsignal mit der Frequenz f _{Feedback} entlang des Lichtweges auf den ersten Empfänger zurückgestrahlt wird, gebildet. Der Ausgang der Basisanordnung zur Steuerung kann dabei unterschiedlich ausgeführt sein. Zum Beispiel kann hier ein dynamischer Ausgang verwendet werden, oder ein statischer Ausgang mit einem Halbleiter, oder ein Relais (potentialfrei).

Der zweite Empfänger 7 bildet einen Teil der erfindungsgemäßen Reflektoranordnung. Es handelt sich dabei um ein IR-Empfänger, welcher überprüft, ob das vom ersten Sender 2 abgegebene Aktivierungssignal 3 anliegt. Die aktive Reflektoranordnung weist hierzu eine entsprechende Elektronik auf, in welche das Aktivierungssignal detektiert. Insbesondere wird dabei die Frequenz des am Sender auftreffenden Signals bestimmt und überprüft, ob diese der Frequenz f Aktivierung des ersten Senders 2 entspricht. Der Empfänger weist dabei einen Normalbetrieb auf, in welchem er ständig empfangsbereit ist. Weiterhin weist er einen Stand-by-Betrieb auf, in welchem kurze Empfangsperioden von ca. 10 ms mit langen Pausenzeiten von ca. 100 bis 300 ms abwechseln. Hierdurch ergibt sich ein erheblich verringerter Stromverbrauch. Detektiert der zweite Empfänger 7 das Aktivierungssignal der Basisanordnung 1, erzeugt er ein Steuersignal, welches über die Signalstrecke 22 an den zweiten Sender weitergeleitet wird, welcher daraufhin ein Feedback-Signal abgibt.

Der zweite Sender 8 ist dabei ebenfalls Teil der Reflektoranordnung 6. Es handelt sich um ein Infrarot-Sender, welcher vom zweiten Empfänger 7 fremdgetriggert wird. Wird der zweite Sender entsprechend angesteuert, gibt er ein Feedback-Signal mit der Frequenz f _{Feedback} ab, wobei f _{Feedback} sich von f Aktivierung unterscheidet. Durch die Verwendung unterschiedlicher Frequenzen für das Aktivierungssignal und das Feedback-Signal wird ausgeschlossen, daß ungewollte Reflexionen die Sicherheit der Lichtschranke beeinträchtigen.

Die Basisanordnung weist weiterhin ein Powermanagement 13 auf, welches mit der Solarzelle 12 und dem Akku 11 zusammenwirkt und den Sender und Empfänger der Reflektoranordnung mit Energie versorgt. Das Powermanagement wird dabei über die Signalstrecke 23 vom zweiten Empfänger 7 angesteuert, um die Stand-by-Funktion umzusetzen. Insbesondere wird dabei die Energieversorgung für den zweiten Sender 8 im Stand-by-Modus komplett ausgeschaltet. Weiterhin übernimmt das Powermanagement 13 die Ladung des Akkus 11.

Die erfindungsgemäße Reflexionslichtschranke beruhte dabei auf zwei optischen Signalstrecken 3 und 9 für die Überwachung des Lichtweges 30. Bei gleichbleibendem elektrischen Funktionsablauf sind dabei je nach Anwendung für die optischen Strecken unterschiedliche räumliche Anordnungen möglich:

### Getrennte Anordnung:

Die Sende- und Empfangseinrichtungen sind bei der Basisanordnung und bei der Refektoranordnung räumlich getrennt und bilden zwei getrennte optische Lichtwege. Die Arbeitsweise ist dann vergleichbar mit zwei Einweglichtschranken, welche hintereinander geschaltet wurden. Dabei können, wie im Ausführungsbeispiel gezeigt, dennoch sowohl Sender als auch Empfänger jeweils in eine Baueinheit integriert sein, und lediglich einen entsprechenden Abstand aufweisen. Alternativ ist es auch möglich, daß die einzelnen Sender und Empfänger jeweils getrennte Baueinheiten bilden, welche dann entsprechend flexibler montiert werden können. Hierdurch ist zudem die Überwachung eines größeren Lichtweges möglich. Für die getrennte Anordnung müssen dabei auch nicht notwendigerweise unterschiedliche Signale für die beiden optischen Signalstrecken verwendet werden.

### Kompakte Anordnung:

Die Sende- und Empfangseinrichtungen sind dabei sowohl beim Basisgerät als auch bei der Reflektoreinheit räumlich benachbart angeordnet, so daß sich zwei Lichtwege ergeben, welche wie bei einer herkömmlichen passiven Reflexlichtschranke angeordnet sind. Bei der Integration von Fotosender und Empfänger in ein Modul läßt sich dabei das System auf eine bi-direktionale optische Lichtstrecke zusammenfassen. Hierbei ergibt sich der Vorteil, daß eine aufwendige Optik eingespart werden kann und die Anordnung leicht zu justieren ist. Für die Basis und die Reflektoreinheit ist dabei jeweils nur ein Linsensystem nötig.

## Patentansprüche

1. Lichtschranke zur Überwachung eines Lichtweges (30) mit einer Basisanordnung (1) aus einem ersten Sender (2), welcher ein Lichtsignal (3) ausstrahlt, und einem ersten Empfänger (4), welcher ein Ausgangssignal für eine Steuerung generiert, und einer aktiven Reflektoranordnung (6) mit einem zweiten Empfänger (7) zum Empfang des von dem ersten Sender (2) ausgestrahlten Lichtsignals (3) und einem zweiten Sender (8) zum Aussenden eines Feedback-Signals (9) in Abhängigkeit vom empfangenen Lichtsignal (3),
**dadurch gekennzeichnet, dass**
die aktive Reflektoranordnung (6) eine Auswerteeinheit aufweist, welche überprüft, ob das vom ersten Sender (2) ausgestrahlte Lichtsignal (3) am zweiten Empfänger (7) ankommt, und dass der zweite Sender (8) ein Feedback-Signal (9) an den ersten Empfänger (7) aussendet, im Falle, dass das vom ersten Sender (2) ausgestrahlte Lichtsignal (3) am zweiten Empfänger (7) ankommt, wobei der erste Empfänger (7) nach Auswertung des Feedback-Signals (9) am Ausgang (21) der Basisanordnung (1) ein entsprechendes Schaltsignal zur Verfügung stellt.

2. Lichtschranke nach Anspruch 1, wobei der erste und der zweite Sender (8) unterschiedliche Signale aussenden.

3. Lichtschranke nach Anspruch 2, wobei das vom zweiten Sender (8) ausgestrahlte Feedback-Signal (9) eine andere Frequenz aufweist als das vom ersten Sender (2) ausgestrahlte Signal.

4. Lichtschranke nach Anspruch 2 oder 3, wobei das vom zweiten Sender (8) ausgestrahlte Feedback-Signal (9) eine andere Codierung aufweist als das vom ersten Sender (2) ausgestrahlte Signal.

5. Lichtschranke nach einem der vorangegangenen Ansprüche, wobei der erste Sender (2) und der erste Empfänger (4) eine Baueinheit bilden und/oder der zweite Sender (8) und der zweite Empfänger (7) eine Baueinheit bilden.

6. Lichtschranke nach einem der vorangegangenen Ansprüche, wobei der erste Sender (2) und der erste Empfänger (4) mit einem gewissen Abstand voneinander angeordnet oder anordenbar sind und getrennte Optiken aufweisen und/oder der zweite Sender (8) und der zweite Empfänger (7) mit einem gewissen Abstand voneinander angeordnet oder anordenbar sind und getrennte Optiken aufweisen.

7. Lichtschranke nach Anspruch 5, wobei Sender und Empfänger eine gemeinsame Optik aufweisen.

8. Lichtschranke nach einem der vorangegangenen Ansprüche, wobei die Energieversorgung von Basisanordnung und Reflektoranordnung (6) getrennt ausgeführt sind.

9. Lichtschranke nach einem der vorangegangenen Ansprüche, wobei die Energieversorgung der Reflektoranordnung (6) über einen elektrischen Energiespeicher und/oder einen Solarkollektor (12) erfolgt.

10. Lichtschranke nach einem der vorangegangenen Ansprüche, wobei die Reflektoranordnung (6) einen Stand-By Modus aufweist.

11. Lichtschranke nach Anspruch 10, wobei der zweite Empfänger (7) im Stand-By Modus in vorgegebenen Abständen aus einem inaktiven Zustand in einen aktiven Zustand schaltet, um bei Empfang eines entsprechenden Lichtsignals (3) in einen Normalmodus mit ständiger Empfangsbereitschaft zu schalten.

12. Torantriebssteuerung mit einer Lichtschranke nach einem der vorangegangenen Ansprüche.

## Claims

1. A light barrier for the monitoring of a light path (30) having a base assembly (1) of a first transmitter (2) emitting a light signal (3) and a first receiver (4) generating an output signal for a control, and an active reflector assembly (6) having a second receiver (7) for the reception of the light signal (3) emitted by the first transmitter (2) and a second transmitter (8) for the transmission of a feedback signal (9) in dependence on the received light signal (3),
**characterized in that**
the active reflector assembly (6) has an evaluation unit which checks whether the light signal (3) emitted by the first transmitter (2) arrives at the second receiver (7), and **in that** the second transmitter (8) emits a feedback signal (9) to the first receiver (7), if the light signal (3) emitted by the first transmitter (2) arrives at the second receiver (7), wherein the first receiver (7) provides a corresponding switch signal at the output (21) of the base assembly (1) after the evaluation of the feedback signal (9).

2. A light barrier in accordance with claim 1, wherein the first and the second transmitters (8) transmit different signals.

3. A light barrier in accordance with claim 2, wherein the feedback signal (9) emitted by the second transmitter (8) has a different frequency than the signal emitted by the first transmitter (2).

4. A light barrier in accordance with either of claims 2 or 3, wherein the feedback signal (9) emitted by the second transmitter (8) has a different encoding than the signal emitted by the first transmitter (2).

5. A light barrier in accordance with one of the preceding claims, wherein the first transmitter (2) and the first receiver (4) form a unit and/or the second transmitter (8) and the second receiver (7) form a unit.

6. A light barrier in accordance with one of the preceding claims, wherein the first transmitter (2) and the first receiver (4) are or can be arranged at a certain spacing from one another and have separate optical systems and/or the second transmitter (8) and the second receiver (7) are or can be arranged at a certain spacing from one another and have separate optical systems.

7. A light barrier in accordance with claim 5, wherein the transmitter and receiver have a common optical system.

8. A light barrier in accordance with one of the preceding claims, wherein the energy supply of the base assembly and of the reflector assembly (6) are made separately.

9. A light barrier in accordance with one of the preceding claims, wherein the energy supply of the reflector assembly (6) takes place via an electrical energy store and/or a solar collector (12).

10. A light barrier in accordance with one of the preceding claims, wherein the reflector assembly (6) has a stand-by mode.

11. A light barrier in accordance with claim 10, wherein the second receiver (7) switches from an inactive state into an active state at preset intervals in the stand-by mode to switch into a normal mode with constant reception readiness on reception of a corresponding light signal (3).

12. A door drive control comprising a light barrier in accordance with one of the preceding claims.

## Revendications

1. Barrière lumineuse destinée à la surveillance d'un trajet optique (30), comprenant un ensemble base (1) composé d'un premier émetteur (2), qui émet un signal lumineux (3), et d'un premier récepteur (4), qui génère un signal de sortie pour un dispositif de commande, et un ensemble réflecteur (6) actif doté d'un second récepteur (7) destiné à recevoir le signal lumineux (3) émis par le premier émetteur (2) et un second émetteur (8) destiné à envoyer un signal de réaction (9) en fonction du signal lumineux (3) reçu,
**caractérisée en ce que**
l'ensemble réflecteur (6) actif comporte une unité d'évaluation, qui vérifie si le signal lumineux (3) émis par le premier émetteur (2) arrive au second récepteur (7), et **en ce que** le second émetteur (8) envoie un signal de réaction (9) au premier récepteur (7), dans le cas où le signal lumineux (3) émis par le premier émetteur (2) arrive au second récepteur (7), le premier récepteur (7) mettant à disposition un signal de commutation correspondant à la sortie (21) de l'ensemble base (1) après évaluation du signal de réaction (9).

2. Barrière lumineuse selon la revendication 1, dans laquelle le premier et le second émetteur (8) émettent des signaux différents.

3. Barrière lumineuse selon la revendication 2, dans laquelle le signal de réaction (9) émis par le second émetteur (8) possède une autre fréquence que le signal émis par le premier émetteur (2).

4. Barrière lumineuse selon la revendication 2 ou 3, dans laquelle le signal de réaction (9) émis par le second émetteur (8) possède un autre codage que le signal émis par le premier émetteur (2).

5. Barrière lumineuse selon l'une des revendications précédentes, dans laquelle le premier émetteur (2) et le premier récepteur (4) forment un sous-ensemble et/ou le second émetteur (8) et le second récepteur (7) forment un sous-ensemble.

6. Barrière lumineuse selon l'une des revendications précédentes, dans laquelle le premier émetteur (2) et le premier récepteur (4) sont ou peuvent être disposés à une certaine distance l'un de l'autre et comportent des instruments optiques séparés et/ou le second émetteur (8) et le second récepteur (7) sont ou peuvent être disposés à une certaine distance l'un de l'autre et comportent des instruments optiques séparés.

7. Barrière lumineuse selon la revendication 5, dans laquelle émetteur et récepteur comportent des instruments optiques communs.

8. Barrière lumineuse selon l'une des revendications précédentes, dans laquelle l'alimentation en énergie de l'ensemble base et celle de l'ensemble réflecteur (6) sont réalisées séparément.

9. Barrière lumineuse selon l'une des revendications précédentes, dans laquelle l'alimentation en énergie de l'ensemble réflecteur (6) s'effectue par le biais d'un accumulateur d'énergie électrique et/ou d'un capteur solaire (12).

10. Barrière lumineuse selon l'une des revendications précédentes, dans laquelle l'ensemble réflecteur (6) comporte un mode de veille.

11. Barrière lumineuse selon la revendication 10, dans laquelle le second récepteur (7) en mode de veille commute à intervalles prédéfinis d'un état inactif à un état actif afin de commuter dans un mode normal prêt à la réception en continu lors de la réception d'un signal lumineux (3) correspondant.

12. Commande d'entraînement de porte comprenant une barrière lumineuse selon l'une des revendications précédentes.
